# EUROPÄISCHE PATENTSCHRIFT

(11) **EP 3 218 683 B1**
(45) Veröffentlichungstag und Bekanntmachung des Hinweises auf die Patenterteilung: **07.06.2023**
(21) Anmeldenummer: 15790468.1
(22) Anmeldetag: 04.11.2015
(51) Int. Cl.: G01M 13/025, G01L 5/28

(54) **BREMSENPRÜFSTAND**
BRAKE TEST STAND
BANC D'ESSAI DE FREINS

(30) Priorität: 14.11.2014 DE 102014116714
(43) Veröffentlichungstag der Anmeldung: 20.09.2017
(73) Patentinhaber: CSGmbh&Co. KG, 87674 Ruderatshofen-Apfeltrang (DE)
(72) Erfinder: SCHMID, Stefan, 87674 Ruderatshofen-Apfeltrang (DE)
(74) Vertreter: Bockhorni & Brüntjen Partnerschaft Patentanwälte mbB
(86) Internationale Anmeldenummer: PCT/EP2015/002224
(87) Internationale Veröffentlichungsnummer: WO 2016/074777

(56) Entgegenhaltungen:
- DE-A1-102004 039 044
- DE-A1-102008 032 760
- JP-A- S61 280 536
- JP-A- 2007 271 447
- US-A- 5 450 748

## Beschreibung

Die Erfindung betrifft einen verbesserten Bremsenprüfstand. Weiterhin betrifft die Erfindung ein optimiertes Verfahren zur Prüfung einer Bremse. Die vom Markt verlangten Entwicklungszeiten im Automobilbereich werden zunehmend kürzer. Gleichzeitig steigt die Komplexität der Baugruppen von Fahrzeugen zunehmend an. Im Bereich der Bremsentechnik kommen daher schon seit vielen Jahren Prüfstände zum Einsatz, mit denen Neuentwicklungen bereits vor dem Vorhandensein eines kompletten Fahrzeugs getestet und verbessert werden können. Diese Prüfstände haben die Aufgabe, möglichst realistische Einsatzbedingungen für die zu testende Bremse bereitzustellen, um sichere Vorhersagen auf das spätere Verhalten der Bremse im Fahrzeug treffen zu Herkömmliche Bremsprüfstände sind z.B. aus den Dokumenten JP 2007 271447 A, DE 10 2008 032760 A1 und JP S61 280536 aus dem Stand der Technik bekannt.

Ein wesentlicher Aspekt bei der Simulation von Bremsvorgängen auf einem Prüfstand ist die kinetische Energie des Fahrzeugs. Diese Energie hängt in der Realität von der Fahrgeschwindigkeit aber auch vom Fahrzeuggewicht und der Fahrsituation, wie beispielsweise Kurvenfahrt oder Fahrt bei Steigung oder Gefälle, ab.

Es sind Bremsenprüfstände bekannt, bei denen die simulierte kinetische Energie des Fahrzeugs durch rotierende Schwungmassen zur Verfügung gestellt wird. Die kinetische Energie hängt dabei vom Trägheitsmoment der rotierenden Schwungmasse ab. Nachteilig an derartigen Prüfständen ist, dass unterschiedliche kinetische Energien nur durch eine Veränderung der rotierenden mechanischen Schwungmasse simuliert werden können. Dies erfordert mechanische Umbauten und ist daher während eines Prüflaufes nicht möglich. Ohne Umbau der Schwungmasse kann eine Veränderung der kinetischen Energie hier nur durch eine Veränderung der Drehzahl erreicht werden. Dies widerspricht in den meisten Fällen dem Testgedanken. So müsste beispielsweise der Unterschied im Bremsverhalten zwischen einer horizontalen Fahrt und einer Fahrt bergab (zusätzliche kinetische Energie durch das Gefälle) bei einem bekannten Bremsenprüfstand über eine Erhöhung der Drehzahl bei der Simulation der Fahrt bergab realisiert werden. Diese Erhöhung der Drehzahl an der Bremse findet aber in der Realität nicht statt, so dass die simulierte Prüfung keine aussagekräftigen Ergebnisse liefert.

Aufgabe der vorliegenden Erfindung ist es daher, die Übereinstimmung von simulierten Bremsenprüfungen mit der Realität zu verbessern und somit die bei der Prüfung ermittelten Ergebnisse aussagekräftiger zu machen.

Diese Aufgabe wird gelöst mit einem Bremsenprüfstand nach Anspruch 1 und durch ein Verfahren zur Prüfung mindestens einer Bremese nach Anspruch 6, wobei die zur Prüfung der Bremse benötigte Energie bzw. das zur Prüfung der Bremse benötigte Drehmoment von einem Antriebsmotor zur Verfügung gestellt wird, wobei zumindest vor der Prüfung der Bremse ein Lastgenerator zugeschaltet wird und die benötigte Energie bzw. das benötigte Drehmoment durch ein Drehmomenten-Gleichgewicht zwischen dem Antriebsmoment eines Antriebsmotors und einem Lastmoment eines Lastgenerators aufgebaut bzw. bereitgestellt wird.

Eine Bremse setzt beim Bremsvorgang in der Realität zuvor vorhandene kinetische Energie des Fahrzeugs in Wärme um. Bei der Simulation eines Bremsvorgangs muss also diese kinetische Energie zu Beginn des Bremsvorgangs im System vorliegen. Erfindungsgemäß wird die kinetische Energie von einem Antriebsmotor zur Verfügung gestellt. Eine mechanische Schwungmasse als zusätzlicher Energiespeicher ist dazu nicht vorgesehen. Zu Beginn eines vorgeschlagenen Verfahrens wird die zu prüfende Bremse von einem Antriebsmotor auf die gewünschte Drehzahl gebracht. Der Antriebsmotor arbeitet zu diesem Zeitpunkt nur gegen das Widerstandsmoment der geöffneten Bremse, welches sehr gering im Vergleich zum Bremsmoment bei betätigter Bremse ist. Die im System gespeicherte mechanische Energie ist aufgrund der geringen bewegten Massen ebenfalls gering. Würde in diesem Stadium die Bremse betätigt werden, käme der Antriebsmotor sehr schnell zum Stehen, da die geringe vorhandene kinetische Energie sehr schnell beim Bremsen in Wärme umgesetzt wäre. Eine Nachregelung des Antriebsmomentes des Antriebsmotors stößt bei plötzlicher Betätigung der Bremse sehr schnell an ihre physikalischen Grenzen. Das im Leerlauf nur sehr geringe Antriebsmoment müsste sprungartig auf das benötigte Bremsmoment hochgeregelt werden, anders ausgedrückt müsste die kinetische Energie im System sprungartig von der Leerlaufenergie des Prüfstandes auf die gewünschte zu simulierende kinetische Energie des Fahrzeugs erhöht werden. Kein aktuell bekanntes Antriebskonzept (Elektromotor, Verbrennungsmotor, Hydraulikmotor, ...) kann so eine sprungartige Erhöhung leisten. Die Folge wäre daher ein Einbruch der Drehzahl des Systems so lange, bis durch das nachgeregelte Antriebsmoment die benötigte kinetische Energie wieder zur Verfügung steht. Zur Bereitstellung bzw. Speicherung größerer kinetische Energien, ohne dabei mechanische Schwungmassen einzusetzen, wird daher vor dem Bremsvorgang ein Lastgenerator zugeschaltet. Dieser Lastgenerator erzeugt ein einstellbares Lastmoment, welches dem Antriebsmoment des Antriebsmotors entgegenwirkt. Erfindungsgemäß wird dieses Lastmoment des Lastgenerators zunächst kontinuierlich erhöht. Die Regelung des Antriebsmotors wirkt diesem erhöhten Lastmoment mit ebenfalls erhöhtem Antriebsmoment entgegen, die Drehzahl der Versuchsanordnung wird dabei konstant gehalten. Durch die Arbeit des Antriebsmotors gegen das Lastmoment wird die sich im System befindliche kinetische Energie stufenlos auf einen gewünschten Wert erhöht. Zu Beginn des Bremsvorgangs wird das Lastmoment des Lastgenerators abgeschaltet bzw. kontinuierlich verringert. Die zuvor durch das Zusammenspiel von Lastgenerator und Antriebsmotor für den Bremsvorgang zur Verfügung gestellte kinetische Energie ist nun deutlich höher als bei Leerlauf der Anordnung und ermöglicht zudem eine stufenlose Einstellung dieser kinetischen Energie. Besonders vorteilhaft an der Erfindung ist, dass die Veränderung der kinetischen Energie alleine durch Veränderung des Lastmoments des Lastgenerators eingestellt wird, es sind dafür keinerlei mechanischen oder baulichen Eingriffe in das System nötig. Ein solches erfindungsgemäßes Prüfverfahren ermöglicht auch den automatischen Ablauf von komplexen Prüfprogrammen für Bremsen. So kann beispielsweise auf dem Prüfstand eine reale Teststrecke mit vielen verschiedenen aufeinanderfolgenden Bremsvorgängen simuliert werden. Die bei verschiedenen Bremssituationen, beispielsweise bei Gefälle oder in Kurven, vorliegende kinetische Energie wird einfach vor den entsprechenden, simulierten Bremsvorgängen durch ein angepasstes Lastmoment des Lastgenerators vorgeben, ins System eingebracht und bei der Bremsung von der Bremse der Realität entsprechend umgesetzt. Das erfindungsgemäße Verfahren liefert daher eine sehr genaue Nachbildung der Realität bei der Simulation von Bremsvorgängen und ermöglicht somit die Bewertung von neu entwickelten Bremsen lange bevor diese auf einer realen Teststrecke erprobt werden können.

Des Weiteren ist vorgesehen, dass das Lastmoment des Lastgenerators von der Steuerung vor der Prüfung der Bremse zeitabhängig entsprechend einer Rampe erhöht wird. Die Steuerung und Regelung des Lastmomentes des Lastgenerators wird hierzu von einer automatisch arbeitenden Steuerung übernommen. Dabei wird das Lastmoment des Lastgenerators vor der Prüfung der Bremse kontinuierlich mit der Zeit erhöht, so lange, bis das gewünschte Lastmoment für die Prüfung der Bremse erreicht ist. Das Lastmoment bewirkt dabei ein gleich großes, entgegengesetztes Antriebsmoment des Antriebsmotors. Der Anstieg des Lastmomentes mit der Zeit kann verschiedensten mathematischen Funktionen oder Rampen entsprechen. So kann dieser Anstieg beispielsweise linear erfolgen, allerdings ist das erfindungsgemäße Verfahren nicht auf diese lineare Zeitfunktion beschränkt.

Geschickter Weise ist vorgesehen, dass die von dem Antriebsmotor zur Verfügung gestellte Energie in der Bremse während der Prüfung umgesetzt wird, wobei das von dem Lastgenerator erzeugte Lastmoment während der Prüfung der Bremse verkleinert oder abgeschaltet wird. Ab dem Beginn des Bremsvorganges wird die vom Antriebsmotor zur Verfügung gestellte Energie von der Bremse umgesetzt. Diese Energie wird dabei größtenteils in Wärme umgewandelt. Ab dem Beginn der Umwandlung der Energie des Antriebsmotors durch die Bremse wird das Lastmoment des Lastgenerators verkleinert oder abgeschaltet. Diese Reduzierung des Lastmomentes ergibt sich aus Drehmomentengleichgewicht, welches erforderlich ist um eine konstante Drehzahl des Prüfstandes zu gewährleisten. Mit der Aktivierung der Bremse wird dort ein vorher nicht vorhandenes Bremsmoment erzeugt, welches dem Antriebsmoment des Antriebsmotors entgegenwirkt. Vor der Bremsung wirkt alleine das Lastmoment des Lastgenerators dem Antriebsmoment entgegen. Mit dem Hinzukommen des Bremsmomentes muss daher das Lastmoment um den Betrag des Bremsmomentes reduziert werden, um eine konstante Drehzahl zu erhalten. Ist das Bremsmoment gleich groß wie das Lastmoment vor der Bremsung, wird der Lastgenerator komplett abgeschaltet. Da Drehmoment und Energie physikalisch über die Drehzahl gekoppelt sind, gelten für die im System wirkenden Energien (kinetische Energie des Antriebsmotors, im Lastgenerator umgesetzte Energie, in der Bremse umgesetzte Energie) äquivalente Zusammenhänge, wie sie für das Verhältnis der Drehmomente beschrieben wurden. Die im Lastgenerator umgesetzte Energie wird daher nach Einsetzen der Bremsung um den Betrag der in der Bremse umgesetzte Energie reduziert um im Gleichgewicht mit der kinetischen Energie des Antriebsmotors zu bleiben.

Des Weiteren ist in günstiger Weise vorgesehen, dass die Drehzahl des Antriebsmotors und das Lastmoment des Lastgenerators von der Steuerung während der Prüfung der Bremse entsprechend der Umsetzung der Energie an der Bremse geregelt werden. Wie bereits dargestellt, besteht ein physikalischer Zusammenhang zwischen den wirkenden Drehmomenten, der Drehzahl und den Energien im System. Die Umsetzung einer bestimmten Menge von Energie an der Bremse ist eine Vorgabe bei der Prüfung der Bremse. Andere Größen im System, wie das Lastmoment des Lastgenerators, Antriebsmoment und Drehzahl des Antriebsmotors usw. werden von der Steuerung entsprechend der bekannten physikalischen Zusammenhänge mit der umgesetzten Bremsenergie automatisch geregelt. Die Steuerung verarbeitet dabei Eingangssignale diverser Sensoren zu den entsprechenden Stellgrößen für die Komponenten Lastgenerator und Antriebsmotor, so dass die Umsetzung von Energie an der Bremse den Vorgaben der Prüfaufgabe entspricht.

Vorteilhafterweise ist vorgesehen, dass die Drehzahl des Antriebsmotors von der Steuerung bis zur Prüfung der Bremse als konstant geregelt wird, indem alle wirksamen Drehmomente des Antriebsmotors, des Lastgenerators und der Bremse im Gleichgewicht gehalten werden. Eine konstante Drehzahl des Antriebsmotors und damit auch eine konstante Drehzahl der zu prüfenden Bremse während des Beginns der Bremsung ist wichtig für eine realitätsnahe Simulation. Gerade der Übergang zwischen der Wirkung des Lastgenerators und der aktivierten Bremse ist hier entscheidend. Zur Regelung einer konstanten Drehzahl während dieses Überganges wird von der Steuerung auf die Signale von Drehzahl- und Drehmomentsensoren zurückgegriffen. Werden von der Steuerung dabei kleinste Veränderungen in der Drehzahl erkannt, so werden automatisch umgehend Steuersignale an die Komponenten Lastgenerator und Antriebsmotor gesandt, um deren wirkende Drehmomente zu beeinflussen und so über ein Gleichgewicht von Antriebsmoment, Lastmoment und Bremsmoment die Drehzahl der Bremse konstant zu halten.

In einer weiteren bevorzugten Ausführungsform ist vorgesehen, dass während der Prüfung der Bremse Daten zum Bremsverhalten, die eine Bewertung der zu prüfenden Bremse ermöglichen, von der Steuerung verarbeitet und vom Fahrersimulationsspeicher aufgezeichnet werden. Die Steuerung weist Eingänge von verschiedenen Sensoren auf. Dies können beispielsweise Drehmoment- und/oder Drehzahlsensoren sein. Die über diese Sensoren ermittelten Werte werden von der Steuerung in einem Fahrsimulationsspeicher abgespeichert. Gerade Drehmoment- und Drehzahlwerte in Kombination mit Zeitwerten erlauben eine genaue Bewertung der Vorgänge, die sich an der Bremse während der Prüfung abspielen. Selbstverständlich können auch andere Daten, die während der Prüfung der Bremse anfallen, aufgezeichnet werden. Denkbar wären hier beispielsweise die Temperatur an verschiedenen Punkten der Bremse oder mechanische Spannungsgrößen an der Bremse oder deren Aufhängung. Durch die Abspeicherung dieser Prüfdaten kann eine Bewertung der geprüften Bremse auch zu einem anderen Zeitpunkt oder, bei Übertragung der Daten über eine Datenschnittstelle, auch an einem anderen Ort erfolgen. Weiterhin können Messwerte verschiedener Bremsen oder verschiedene Entwicklungsstände von Bremsen sehr einfach elektronisch miteinander verglichen werden.

Des Weiteren ist in dem Vorschlag vorteilhafterweise vorgesehen, dass im Fahrsimulationsspeicher mindestens eine Streckenprofilinformation hinterlegt ist und die Steuerung aus dieser Streckenprofilinformation einen zeitlichen Verlauf von Drehmoment und Drehzahl ermittelt, der in der Testphase, nach Prüfungsbeginn, an der Bremse anlegen soll und diese Parameter auf den Antriebsmotor übertragen werden. Der Begriff Streckenprofilinformation steht hier für einen Datensatz, der alle für die Prüfung der Bremse benötigten Eigenschaften einer zu simulierenden Teststrecke enthält. Das sind vor allem Daten zu den Zeitpunkten und Zeitdauern von durchzuführenden Bremsungen. Zusätzlich zu diesen Zeitinformationen gehören zur Streckenprofilinformation auch Daten bezüglich der von der Bremse umzusetzenden kinetischen Energie des Fahrzeugs, sowie der zum Zeitpunkt der Bremsung anliegenden Raddrehzahl. Die Steuerung ermittelt aus dieser Streckenprofilinformation den für die Prüfung der Bremse auf dem Prüfstand benötigten zeitlichen Verlauf von Drehmoment und Drehzahl. Während der Prüfung der Bremse werden die entsprechenden Stellgrößen zur Abbildung des Streckenprofils am Prüfstand von der Steuerung an den Antriebsmotor und den Lastgenerator übermittelt und deren Umsetzung in einem Regelkreis überwacht. Selbstverständlich können im Fahrsimulationsspeicher auch mehrere verschiedene Streckenprofilinformationen hinterlegt werden. Diese Streckenprofilinformationen können dann vor der Durchführung eines erfindungsgemäßen Prüfverfahrens an der Steuerung ausgewählt werden. So ist es möglich ohne mechanische Umbauten verschiedenste, simulierte Teststrecken per Software auszuwählen und auszuführen.

Die eingangs gestellte Aufgabe wird auch gelöst durch einen Bremsenprüfstand wenigstens umfassend einen Antriebsmotor, der über mindestens eine Drehmomentübertragungsvorrichtung mit einem Lastgenerator und mindestens einer zu prüfenden Bremse gekoppelt ist, wobei der Antriebsmotor die von der zu prüfenden Bremse umzusetzende Energie beziehungsweise Drehmoment zur Verfügung stellt und wobei zumindest vor der Prüfung der Bremse der Lastgenerator die von dem Antriebsmotor zur Verfügung gestellte Energie bzw. das von dem Antriebsmotor zur Verfügung gestellte Drehmoment aufnimmt.

In einem erfindungsgemäßen Bremsenprüfstand stellt ein Antriebsmotor die zur Prüfung der Bremse erforderliche kinetische Energie zur Verfügung. Dieser Antriebsmotor ist über eine Drehmomentübertragungsvorrichtung in Wirkverbindung mit der Bremse gekoppelt. Diese Drehmomentübertragungsvorrichtung besteht im einfachsten Fall aus einer Welle, kann aber auch von einem Zahnradgetriebe, Riemengetriebe, Kettengetriebe oder ähnlichem gebildet werden.

Neben dieser Verbindung zur zu prüfenden Bremse weist der Antriebsmotor eine weitere Wirkverbindung mit einem Lastgenerator auf. Dieser Lastgenerator ist auch über eine Drehmomentübertragungsvorrichtung mit dem Antriebsmotor verbunden. Diese Drehmomentübertragungsvorrichtungen kann identisch zu der sein, mit der der Antriebsmotor mit der Bremse verbunden ist, im einfachsten Fall gebildet durch eine durchgehende Welle. Selbstverständlich kann aber auch eine von der Bremse unabhängige Drehmomentübertragungsrichtung zum Einsatz kommen. Der Lastgenerator ist ein Gerät, welches zeitabhängig unterschiedliche Lastmomente zur Verfügung stellt. Diese Lastmomente wirken dann, übertragen durch die Drehmomentübertragungsvorrichtung, dem Antriebsmoment des Antriebsmotors entgegen. Rotierende Schwungmassen sind im erfindungsgemäßen Prüfstand nicht vorgesehen, aber auch nicht ausgeschlossen. Zu Beginn der Prüfung der Bremse dreht der Antriebsmotor die Bremse mit der gewünschten Drehzahl und arbeitet dabei nur gegen das Widerstandsmoment der geöffneten Bremse, der Lastgenerator erzeugt zu diesem Zeitpunkt noch keine Last. Die zu diesem Zeitpunkt im System befindliche Energie ist gering, da der Antriebsmotor nur ein geringes Antriebsmoment zur Verfügung stellen muss und kein mechanischer Energiespeicher, wie beispielsweise ein Schwungrad, zur Verfügung steht. Würde nun der Bremsvorgang plötzlich begonnen werden, so würde die Bremse die im System gespeicherte kinetische Energie sehr schnell in Wärme umgewandelt haben und der Antriebsmotor schnell zum Stehen kommen. Um größere kinetische Energie im System zur Verfügung zu stellen, müsste das Antriebsmoment des Antriebsmotors zu Beginn der Bremsung sprungartig erhöht werden. Eine derartige Sprungantwort ist mit zur Verfügung stehenden Technologien (Elektromotor, Verbrennungsmotor, Hydraulikmotor, Pneumatikmotor,...) nicht erreichbar, was dazu führen würde, das die Drehzahl der Prüfanordnung zu Beginn der Bremsung zunächst einbricht, solange bis der Antriebsmotor durch Nachregelung ein höheres Antriebsmoment zur Verfügung stellt. Dieser Drehzahleinbruch ist unerwünscht bei der Simulation, da er in der Realität nicht auftritt. In einem erfindungsgemäßen Bremsenprüfstand ist daher der Lastgenerator vorgesehen, der vor Beginn der Bremsung dafür sorgt, dass der Antriebsmotor die gewünschte kinetische Energie für die simulierte Bremsung zur Verfügung stellt. Das Lastmoment des Lastgenerators wird vor der Bremsung kontinuierlich erhöht. Das Antriebsmoment des Antriebsmotors wird in gleichem Maße vergrößert, wobei die Drehzahl des Prüfstandes konstant gehalten wird. Das Lastmoment wird so lange erhöht, bis im System die gewünschte kinetische Energie zur Verfügung steht. In anderen Worten "spannt der Lastgenerator den Antriebsmotor vor", so dass die im System gespeicherte mechanische Energie vergrößert wird. Besonders vorteilhaft an der Wirkung des Lastgenerators ist, dass die Energie im System stufenlos eingestellt werden kann. Zu Beginn der Bremsung wird der Lastgenerator abgeschaltet bzw. das von ihm erzeugte Lastmoment kontinuierlich verringert, die gespeicherte kinetische Energie wird dann von der Bremse in Wärme umgesetzt. Der Lastgenerator kann beispielsweise von einer Wirbelstrombremse gebildet werden. Je höher der angelegte Bremsstrom ist, desto höher ist das Lastmoment des Lastgenerators. Vorteilhaft an einem auf diese Art ausgebildeten erfindungsgemäßen Prüfstand ist, dass unterschiedliche kinetische Energie zur Simulation unterschiedlicher Fahrsituationen beim Prüfen von Bremsen ganz einfach durch unterschiedliche zeitliche Regelung eines Bremsstroms für den Lastgenerator realisiert werden können. Eine Drehzahlveränderung oder sogar mechanische Kupplungs- oder Umbauvorgänge von Schwungmassen werden in keiner Weise benötigt. Ein solcher erfindungsgemäßer Bremsenprüfstand ermöglicht daher auch den automatischen Ablauf von komplexen Prüfprogrammen für Bremsen. So kann beispielsweise auf dem Prüfstand eine reale Teststrecke mit vielen verschiedenen aufeinanderfolgenden Bremsvorgängen simuliert werden. Die bei verschiedenen Bremssituationen, beispielsweise bei Gefälle oder in Kurven, vorliegende kinetische Energie wird einfach vor den entsprechenden simulierten Bremsvorgängen durch ein angepasstes Lastmoment des Lastgenerators vorgeben, ins System eingebracht und bei der Bremsung von der Bremse der Realität entsprechend umgesetzt. Ein erfindungsgemäßer Bremsenprüfstand liefert daher eine sehr genaue Nachbildung der Realität verschiedenster Fahrsituationen bei der Simulation von Bremsvorgängen und ermöglicht somit die Bewertung von neu entwickelten Bremsen, lange bevor diese auf einer realen Teststrecke erprobt werden können.

Des Weiteren ist in günstiger Weise vorgesehen, dass der Prüfstand eine Steuerung aufweist, welche mindestens einen Eingang für das Signal mindestens eines Drehmomentsensors aufweist und welche Ausgänge jeweils zur Ansteuerung des Lastgenerators, des Antriebsmotors und/oder der zu prüfenden Bremse aufweist. In dieser Ausführungsform ist eine elektronische Steuerung die zentrale Instanz für den automatischen Betrieb eines erfindungsgemäßen Bremsenprüfstandes. Dazu weist diese Steuerung mehrere Sensoreingänge auf, über die Informationen zum aktuellen Status des Prüfstandes ermittelt werden. Eine essenzielle Eingangsgröße für die Regelung des automatischen Betriebs des Bremsenprüfstandes ist das anliegende Drehmoment zwischen Lastgenerator und Antriebsmotor sowie das Drehmoment zwischen Antriebsmotor und Bremse. Neben den für diese Eingangsinformationen benötigten Drehmomentsensoren ist es selbstverständlich möglich, noch weitere Sensoren als Eingänge an die Steuerung anzuschließen. Derartige Sensoren könnten beispielsweise Drehzahl-, Temperatur- oder Spannungssensoren sein. Neben diesen Eingängen weist die Steuerung auch verschiedene Ausgänge auf. Über diese Ausgänge wird der Betrieb des Lastgenerators, des Antriebsmotors und der zu prüfenden Bremse gesteuert. Die Ausgänge können dabei verschiedene physikalische Größen beeinflussen wie beispielsweise die Drehzahl und das Drehmoment des Antriebsmotors.

Geschickter Weise ist vorgesehen, dass der Antriebsmotor von mindestens einem elektrischen Gleichstrommotor, mindestens einem elektrischen Wechselstrommotor, mindestens einem Verbrennungsmotor, mindestens einem Hydraulikmotor oder mindestens einem Pneumatikmotor gebildet wird. Ein erfindungsgemäßer Bremsenprüfstand kann prinzipiell von Motoren der unterschiedlichsten Antriebskonzepte angetrieben werden. Elektrische Motoren bieten große Vorteile bezüglich Steuerung und Regelung. Dabei können die verschiedensten Typen von Elektromotoren zum Einsatz kommen wie beispielsweise Gleichstrommotoren, Wechselstrommotoren, Synchronmotoren oder Asynchronmotoren. Weiterhin können auch Motoren mit anderen Antriebskonzepten, wie Verbrennungsmotoren, Hydraulikmotoren oder Pneumatikmotoren erfindungsgemäß zum Antrieb eines Bremsenprüfstandes eingesetzt werden.

In einer vorteilhaften Ausgestaltung ist vorgesehen, dass der Antriebsmotor aus einer Mehrzahl von Teil-Antriebsmotoren gebildet wird, wobei die Drehmomente dieser Teil-Antriebsmotoren in Summe auf die zu prüfende Bremse wirken. Zur weiteren Erhöhung der Flexibilität bezüglich der Größe der mit dem Prüfstand simulierbaren kinetischen Energie kann der Antriebsmotor auch aus mehreren Teil-Antriebsmotoren aufgebaut sein. Diese Teil-Antriebsmotoren werden dabei so miteinander verbunden, dass ihre Antriebsmomente in Summe auf die zu prüfende Bremse wirken. Wird ein relativ kleines Antriebsmoment zur Simulation einer relativ kleinen kinetischen Energie benötigt, ist es nun möglich beispielsweise nur einen Teil-Antriebsmotor zu betreiben. Diese übrigen Teil-Antriebsmotoren sind dabei ausgekuppelt oder drehen sich im Leerlauf mit. Wird dann ein relativ größeres Antriebsmoment benötigt, werden bei Bedarf weitere Teil-Antriebsmotoren zugeschaltet, so dass sich die wirkenden Drehmomente aller arbeitenden Teil-Antriebsmotoren addieren. Vorteilhaft an dieser Ausführung ist eine kompakte Bauweise sowie eine Redundanz innerhalb der Teil-Antriebsmotoren, so dass bei Ausfall eines Teil-Antriebsmotors der Prüfstand weiterhin mit Hilfe der anderen Teil-Antriebsmotoren betrieben werden kann.

Geschickter Weise ist vorgesehen, dass der Lastgenerator aus wenigstens einer Wirbelstrombremse oder wenigstens einem elektrischen Generator besteht. Generell ist erfindungsgemäß ein Lastgenerator vorgesehen, der die Einstellung eines variablen Widerstandsmomentes, welches gegen das Antriebsmoment des Antriebsmotors wirkt, ermöglicht. Dafür sind im Prinzip Vorrichtungen oder Generatoren verschiedenster Konzepte geeignet. Als besonders vorteilhaft haben sich hier Vorrichtungen mit elektrischen Wirkprinzipien herausgestellt, da diese sehr einfach elektronisch und automatisch regelbar sind. Da der Lastgenerator beim Betrieb des Prüfstandes sehr oft und über eine lange Nutzungsdauer zum Einsatz kommt, empfehlen sich besonders verschleißarme oder verschleißfreie Konzepte. Sehr gute Lösungen stellen daher mechanisch berührungslos arbeitende Wirbelstrombremsen dar. Bei diesem Konzept richtet sich das Lastmoment des Lastgenerators nach einem in die Wirbelstrombremse eingebrachten Bremsstrom. ,Mechanische Verschleißteile gibt es dabei für die Erzeugung des Lastmomentes keine. Darüber hinaus sind elektrische Generatoren verschiedener Konzepte als Lastgenerator geeignet. Das Lastmoment dieser Generatoren richtet sich dabei nach deren elektrischen Betriebsmodus. Die Erfindung ist allerdings nicht auf elektrisch wirkende Vorrichtungen beschränkt. Auch andere Konzepte wie beispielsweise eine einfache mechanische Scheibenbremse könnten als Lastgenerator eingesetzt werden.

Des Weiteren ist in günstiger Weise vorgesehen, dass der Lastgenerator aus einer Mehrzahl von Teil-Lastgeneratoren gebildet wird, wobei die Lastmomente dieser Teil-Lastgeneratoren in Summe auf den Antriebsmotor wirken. In dieser Ausführungsform ist der Lastgenerator mehrteilig aufgebaut, das Konzept ist ähnlich wie es weiter oben bei einer Ausführungsform des Antriebsmotors dargestellt ist. Es sind hier mehrere Lastgeneratoren so miteinander gekoppelt, dass ihre Lastmomente gemeinsam, d.h. in Summe auf den Antriebsmotor wirken. Für die Erzeugung kleinerer Lastmomente reicht eine kleinere Anzahl von aktivierten Teil-Lastgeneratoren aus, für größere Lastmomente werden zusätzliche Teil-Lastgeneratoren zugeschaltet. Es ist dabei auch möglich Teil-Lastgeneratoren unterschiedlicher technischer Konzepte miteinander zu kombinieren. So könnten beispielsweise Wirbelstrombremsen mit elektrischen Generatoren kombiniert werden. Vorteilhaft an einem mehrteiligen Aufbau des Lastgenerators ist die erhöhte Flexibilität bezüglich des bereitgestellten Lastmomentes. Weiterhin besteht eine Redundanz zwischen dem Teil-Lastgenerator, was die Betriebssicherheit des Bremsenprüfstandes erhöht.

Des Weiteren ist vorgesehen, dass die Steuerung einen Fahrsimulationsspeicher aufweist und die Steuerung aufgrund der Fahrdaten aus dem Fahrsimulationsspeicher das Lastmoment bzw. die Energieaufnahme des Lastgenerators sowie die Drehzahl des Antriebsmotors regelt. Dieser Fahrsimulationsspeicher dient dazu, Datensätze zur Prüfung der Bremse bereitzustellen. Diese Datensätze enthalten Vorgaben für die Durchführung der Prüfung der Bremse wie beispielsweise die Anzahl der Bremsungen, die Zeitpunkte der Bremsungen, die Dauer der Bremsungen, die dabei anliegenden Raddrehzahlen sowie die kinetische Energie des Fahrzeugs zum Zeitpunkt der Bremsungen. Diese im Fahrsimulationsspeicher abgelegten Vorgaben zur Bremsenprüfung werden dann von der Steuerung in Form von Stellgrößen an die aktiven Komponenten des Prüfstandes, nämlich den Lastgenerator und den Antriebsmotor übermittelt. In dieser Ausführungsform ist vorgesehen, dass die Steuerung diese aktiven Komponenten des Prüfstandes automatisch regelt.

In einer vorteilhaften Ausgestaltung ist vorgesehen, dass an der zu prüfenden Bremse oder an der Drehmomentübertragungsvorrichtung, die das Drehmoment zwischen Antriebsmotor und zu prüfenden Bremse überträgt, ein Drehzahlsensor angebracht ist, der mit der Steuerung verbunden ist. Dieser Drehzahlsensor ermöglicht als Eingang in die Steuerung einen Vergleich des Istwertes der Drehzahl mit einem vorgegebenen Sollwert. Treten Abweichungen zwischen diesen beiden Werten auf, beeinflusst die Steuerung das System dahingehend, dass die Abweichung wieder beseitigt wird.

In einer bevorzugten Ausgestaltung des Vorschlags ist vorgesehen, dass der Fahrsimulationsspeicher eine Datenschnittstelle für den Datenimport und -export aufweist. Über eine derartige Datenschnittstelle können ermittelte Prüfdaten nach der Durchführung einer Bremsenprüfung exportiert und an anderer Stelle ausgewertet oder verarbeitet werden. Somit ist es beispielsweise möglich große Mengen an Prüfdaten direkt einem Kunden zu übermitteln. Darüber hinaus können auch Vorgaben zur Prüfung von Bremsen in dem Fahrsimulationsspeicher importiert werden. Somit wird beispielsweise ermöglicht, dass Streckenprofilinformationen an einem anderen Ort ermittelt oder erzeugt werden und dann durch Import auf einem erfindungsgemäßen Bremsen Prüfstand simuliert werden. Dies führt zu einer deutlich erhöhten Flexibilität bezüglich verschiedener Prüfprogramme, die so sehr schnell und einfach ausgewählt oder ausgetauscht werden können.

Des Weiteren ist in günstiger Weise vorgesehen, dass der Prüfstand weiterhin eine Klimakammer umfasst, in der die zu prüfenden Bremse während der Prüfung untergebracht ist. Die Unterbringung der zu prüfenden Bremse in einer optionalen Klimakammer ermöglicht die Simulation zusätzlicher Testparameter. Über in der Klimakammer gezielt einstellbare Temperaturen und Luftfeuchtigkeitswerte können unterschiedliche klimatische Rahmenbedingungen beim Prüfen der Bremsen simuliert werden. Selbstverständlich können diese klimatischen Rahmenbedingungen auch von der zentralen Steuerung automatisch beeinflusst und verändert werden, weiterhin können auch die Ist-Klimadaten zeitabhängig im Fahrsimulationsspeicher zusammen mit den anderen Prüfdaten aufgezeichnet werden. Auswirkungen der Klimabedingungen auf das Bremsverhalten lassen sich auf dieser Datenbasis sehr gut erkennen.

Vorteilhafter Weise ist vorgesehen, dass die Klimakammer einen Sprühkopf aufweist, der die zu prüfende Bremse besprüht. Mit Hilfe eines derartigen Sprühkopfes kann die zu prüfende Bremse während der Prüfung beispielsweise befeuchtet werden. Dadurch können Testfahrten bei Regen oder Nässe simuliert werden. Der Sprühkopf ist aber nicht auf Flüssigkeiten beschränkt. Es ist ebenfalls möglich, damit Pulver oder Gase auf die Bremse aufzubringen. Dies ermöglicht die Simulation von Belastungen durch Staub oder Schadgase und trägt somit zur realitätsnahen Simulation komplexer Umgebungs- und Einsatzbedingungen von Bremsen bei. Die zentrale Steuerung des Bremsenprüfstandes greift dabei auch auf die Betriebsparameter des Sprühkopfes zurück und zeichnet diese im Fahrsimulationsspeicher auf. Selbstverständlich ist es auch möglich, Sollwerte für den Betrieb des Sprühkopfes in Form von Daten innerhalb einer Streckenprofilinformation zu hinterlegen. Dies bietet den Vorteil, dass auch Vorgaben bezüglich Staub- oder Gasbelastung vor der eigentlichen Bremsenprüfung ermittelt und in ein Prüfprogramm implementiert werden können, welches dann automatisch auf dem Prüfstand abläuft.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mit offenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

Des Weiteren umfasst die Erfindung auch die Verwendung eines erfindungsgemäßen Bremsenprüfstandes für den Zweck der Durchführung eines erfindungsgemäßen Verfahrens.

In der Zeichnung ist die Erfindung insbesondere in einem Ausführungsbeispiel schematisch dargestellt. Es zeigen:
- Fig. 1: eine schematische Darstellung eines erfindungsgemäßen Bremsenprüfstandes;
- Fig. 2: ein Diagramm mit der Darstellung des Drehmomentes über einer Zeitachse entsprechend einem erfindungsgemäßen Verfahren.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

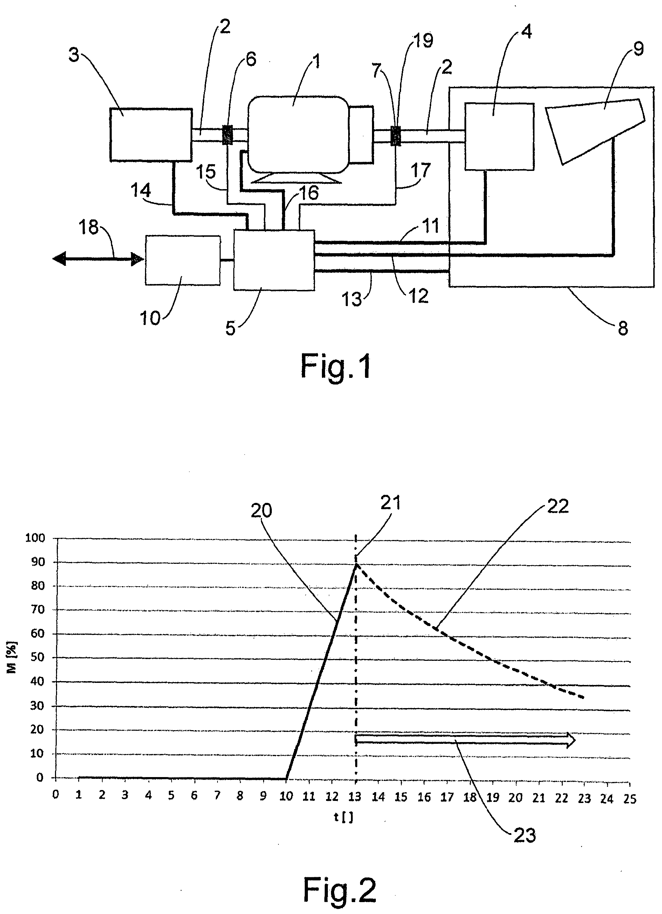

Fig. 1 zeigt eine schematische Darstellung eines erfindungsgemäßen Bremsenprüfstandes. Der Prüfling 4 ist über eine Drehmomentübertragungsvorrichtung 2 mit dem Antriebsmotor 1 verbunden. In der Darstellung wird die Drehmomentübertragungsvorrichtung 2 von einer Welle gebildet. Selbstverständlich kann das Drehmoment aber auch mittels anderer Getriebe wie beispielsweise Zahnradgetriebe, Riemengetriebe oder Kettengetriebe übertragen werden.

Auf der anderen Seite des Antriebsmotors 1 ist der Lastgenerator 3 dargestellt, der ebenfalls über eine Drehmomentübertragungsvorrichtung 2 mit dem Antriebsmotor gekoppelt ist. Wie bereits zur Wirkverbindung von Antriebsmotor und Prüfling erläutert, kann auch die Drehmomentübertragungsvorrichtung zwischen Lastgenerator und Antriebsmotor verschiedenartig ausgeführt sein.

Die Steuerung 5 weist Verbindungsleitungen zu den Sensoren 6, 7, 19 auf, welche Eingänge in die Steuerung darstellen. Der Drehmomentsensor 6, der zwischen Antriebsmotor 1 und Lastgenerator 3 angeordnet ist und der das erzeugte Lastmoment des Lastgenerators 3 misst, ist über Verbindung 15 an die Steuerung 5 angeschlossen. Die Verbindungsleitung 17 schließt den Drehmomentsensor 7 und den Drehzahlsensor 19, welche sich zwischen Antriebsmotor 1 und Prüfling 4 befinden und die das Bremsmoment der Bremse 4 bzw. die Drehzahl der Bremse 4 messen, an die Steuerung 5 an. Darüber hinaus verfügt die Steuerung über mehrere Ausgänge: Die Verbindungsleitung 14 ermöglicht eine Ansteuerung des Lastgenerators 3, der Antriebsmotor 1 wird durch Leitung 16 angesteuert und die zu prüfende Bremse 4 ist über die Ansteuerleitung 11 mit der Steuerung 5 verbunden.

Die Steuerung 5 weist weiterhin eine Datenverbindung zum Fahrsimulationsspeicher 10 auf. Dieser Fahrsimulationsspeicher 10 zeichnet während der Prüfung der Bremse 4 die Eingangsdaten der Sensoren 6, 7, 19, sowie die Stellgrößen der Steuerung an die Komponenten Lastgenerator 3, Antriebsmotor 3 und Bremse 4 auf. Diese Aufzeichnung der Daten erfolgt jeweils in Kombination mit einem Zeitstempel. Die so abgespeicherten Daten können später zur reproduzierbaren Bewertung der geprüften Bremse herangezogen werden. Der Fahrsimulationsspeicher 10 weist eine Datenschnittstelle 18 zum Import und Export von Daten auf. Neben dem Exportieren von Prüfdaten und Messwerten ist es selbstverständlich auch möglich Daten zu importieren. So können Streckenprofile in den Fahrsimulationsspeicher 10 geladen werden, die auf einer realen Testfahrt, beispielsweise auf einer Rennstrecke, beruhen. Diese Streckenprofile können dabei beispielsweise Wertepaare aus benötigter kinetischer Energie und den Zeitpunkten bzw. Zeitperioden, an denen abgebremst wird, enthalten. So kann auf dem Bremsenprüfstand die Simulation einer Testfahrt sehr realitätsnah erfolgen. Die Datenschnittstelle 18 ermöglicht dabei eine sehr rasche Umstellung der Prüfung zwischen verschiedenen zu simulierenden Fahrstrecken und Fahrsituationen.

In Fig. 1 ist auf der rechten Seite die optionale Klimakammer 8 zu sehen, die aber nicht zwingend für einen erfindungsgemäßen Bremsenprüfstand erforderlich ist. Im dargestellten Fall befindet sich die zu prüfende Bremse 4 im Inneren dieser Klimakammer 8. So ist es möglich während der Prüfung die gewünschten klimatischen Umgebungsbedingungen für die Simulation bereitzustellen. Es besteht die Möglichkeit Temperatur und Luftfeuchtigkeit in der Klimakammer individuell einzustellen und auch Veränderungen während der Prüfung durchzuführen. Die Klimakammer 8 ist über die Datenverbindung 13 mit der Steuerung 5 verbunden. Dadurch kann die Klimakammer, wie auch die anderen Komponenten des Prüfstandes, zentral von der Steuerung 5 automatisch geregelt werden. Selbstverständlich ist es ebenfalls möglich über die Datenschnittstelle 18 und den Fahrsimulationsspeicher 10 Klimadaten in Kombination mit anderen Prüfdaten zu im- oder exportieren sowie Klimadaten in Verbindung mit Streckenprofilen einzusetzen.

In Fig. 1 ist in der Klimakammer 8 ein Sprühkopf 9 angebracht. Es besteht die Möglichkeit, die Bremse 4 während der Prüfung zu besprühen, beispielsweise mit Wasser, um so eine nasse Fahrbahn zu simulieren. Der Sprühkopf 9 ist allerdings nicht auf Flüssigkeiten beschränkt. Es können damit auch Pulver oder Gase zur Bremse geleitet und aufgebracht werden um beispielsweise staubige oder schadgasbelastete Umgebungsbedingungen zu simulieren. Der Sprühkopf 9 ist über die Datenleitung 12 mit der Steuerung 5 verbunden, so dass auch für den Sprühkopf 9 sämtliche Funktionen der automatischen Regelung und der Einbindung in Streckenprofile bei der Simulation zur Verfügung stehen.

Fig. 2 zeigt ein Diagramm bei dem die Größe Drehmoment (M) über einer Zeitachse (t) dargestellt ist. Das Diagramm stellt den zeitlichen Ablauf eines erfindungsgemäßen Prüfvorgangs für Bremsen dar. Nach oben ist das Drehmoment angetragen, welches in Prozent bezüglich des maximalen Drehmoments der Anlage angegeben ist. Die horizontal verlaufende Zeitachse ist mit relativen Zeitschritten beschriftet, die Zeitperioden der verschiedenen Verfahrensschritte können bei unterschiedlichen Simulationen und Prüfungen selbstverständlich auch unterschiedliche Verhältnisse zueinander aufweisen. Zu Beginn der Darstellung bei Zeitschritt 1 befindet sich der Prüfstand im Leerlauf. Der Antriebsmotor dreht die zu prüfende Bremse mit der vom Simulationsprogramm vorgegebenen Drehzahl. Der Antriebsmotor arbeitet dabei nur gegen das sehr geringe Widerstandsmoment der geöffneten Bremse an und benötigt für die Aufrechterhaltung der Drehzahl daher nur ein sehr geringes Antriebsmoment. Entscheidend für das Verständnis von Fig. 2 ist der Beginn der Bremsung, der durch eine vertikale Strich-Punkt-Linie 21 dargestellt ist. Die Bremsung beginnt hier somit bei Zeitschritt 13. Um zu Beginn der Bremsung ausreichend Antriebsmoment des Antriebsmotors zur Verfügung zu haben, wird nun erfindungsgemäß bereits vor dem Beginn der Bremsung der Lastgenerator zugeschaltet. Dies erfolgt bei der Darstellung in Fig. 2 bereits bei Zeitschritt 10. Das Lastmoment des Lastgenerators wird daraufhin kontinuierlich gesteigert, was durch die Rampe 20 im Diagramm dargestellt ist. Der Zeitpunkt der Zuschaltung des Lastgenerators, sowie die Steigung der Rampe 20 zur Erhöhung des Lastmomentes mit der Zeit werden so gewählt, dass zu Beginn der Bremsung 21 das gewünschte Lastmoment zur Verfügung steht. Kurz vor dem Zeitpunkt des Beginns der Bremsung 21 entspricht die kinetische Energie im System des Prüfstandes derjenigen kinetischen Energie der zu simulierenden Fahrsituation.

Die beiden physikalischen Größen kinetische Energie und Drehmoment bzw. Lastmoment sind über die Drehzahl miteinander verknüpft. Die Größen Raddrehzahl und kinetische Energie der Situation, die auf dem Prüfstand simuliert werden soll, sind bekannt. Es wird bei der Prüfung auf dem Prüfstand nun zunächst die Drehzahl des Prüflings entsprechend der Vorgabe eingestellt. Das Lastmoment des Lastgenerators wird dann bis zum Beginn der Bremsung 21 so weit erhöht, bis im System auch die gewünschte kinetische Energie vorliegt. Diese kinetische Energie ergibt sich aus dem Produkt von Drehzahl und Lastmoment bzw. dem gleich großen Antriebsmoment. Die beiden Größen oder Begriffe kinetische Energie und Drehmoment sind somit physikalisch gekoppelt und Beschreibungen oder Erklärungen im gleichen Sinne zu gebrauchen.

In Fig. 2 ist der Zeitbereich des eigentlichen Bremsvorganges mit dem Pfeil 23 dargestellt. Die gestrichelte Linie 22 zeigt einen möglichen Verlauf des Bremsmomentes während der Prüfung. Dieser zeitliche Verlauf des Bremsmomentes ist abhängig von der zu simulierenden Fahrsituation und hier daher nur exemplarisch dargestellt. Je nach zu simulierender Fahrsituation kann die Bremsung entweder beendet werden, und somit alle wirkenden Drehmomente auf nahezu Null reduziert werden, was dann wieder einem Zustand des Systems wie bei Zeitschritt 1 entspricht, oder es kann auf die erste Bremsung direkt im Anschluss eine weitere Bremsung mit möglicherweise anderer Drehzahl oder kinetischer Energie erfolgen. Dabei wird vor der nächsten Bremsung wieder mit Hilfe des Lastgenerators die geforderte kinetische Energie ins System eingebracht. Das erfindungsgemäße Verfahren ist somit anpassbar an die verschiedensten Simulationsvorhaben.

## Patentansprüche

1. Bremsenprüfstand wenigstens umfassend
- mindestens einen Antriebsmotor (1)
- der über mindestens eine Drehmomentübertragungsvorrichtung (2) mit
- einem Lastgenerator (3) und
- mindestens einer zu prüfenden Bremse (4) koppelbar ist,
wobei der Antriebsmotor (1) die von der zu prüfenden Bremse (4) umzusetzende Energie beziehungsweise das von der Bremse (4) zu leistende Drehmoment zur Verfügung stellt und wobei zumindest vor der Prüfung der Bremse (4) der Lastgenerator (3) die von dem Antriebsmotor (1) zur Verfügung gestellte Energie bzw. das von dem Antriebsmotor (1) zur Verfügung gestellte Drehmoment aufnimmt,
**dadurch gekennzeichnet, dass** der Bremsenprüfstand eine Steuerung (5) aufweist, die mindestens einen Eingang für das Signal mindestens eines Drehmomentsensors (6, 7) aufweist und welche Ausgänge jeweils zur Ansteuerung des Lastgenerators (3), des Antriebsmotors (1) und der zu prüfenden Bremse (4) aufweist.

2. Bremsenprüfstand nach Anspruch 1, **dadurch gekennzeichnet, dass** an der Drehmomentübertragungsvorrichtung (2), die das Drehmoment zwischen Antriebsmotor (1) und zu prüfender Bremse (4) überträgt, ein Drehzahlsensor (19) angebracht ist, der mit der Steuerung (5) verbunden ist und/oder die Steuerung (5) einen Fahrsimulationsspeicher (10) aufweist und die Steuerung (5) dazu ausgelegt ist, aufgrund der Fahrdaten aus dem Fahrsimulationsspeicher (10) das Lastmoment bzw. die Energieaufnahme des Lastgenerators (3) sowie die Drehzahl des Antriebsmotors (1) zu regeln und/oder der Fahrsimulationsspeicher (10) eine Datenschnittstelle (18) für den Datenimport und -export aufweist.

3. Bremsenprüfstand nach einem der vorhergehenden Ansprüche, **dadurch gekennzeichnet, dass** der Antriebsmotor (1) von mindestens einem elektrischen Gleichstrommotor, mindestens einem elektrischen Wechselstrommotor, mindestens einem Verbrennungsmotor, mindestens einem Hydraulikmotor oder mindestens einem Pneumatikmotor gebildet wird und/oder der Antriebsmotor (1) aus einer Mehrzahl von Teil-Antriebsmotoren gebildet wird, wobei die Drehmomente dieser Teil-Antriebsmotoren in Summe auf die zu prüfende Bremse (4) wirken.

4. Bremsenprüfstand nach einem der vorhergehenden Ansprüche, **dadurch gekennzeichnet, dass** der Lastgenerator (3) aus wenigstens einer Wirbelstrombremse oder wenigstens einem elektrischen Generator besteht und/oder der Lastgenerator (3) aus einer Mehrzahl von Teil-Lastgeneratoren gebildet wird, wobei die Lastmomente dieser Teil-Lastgeneratoren in Summe auf den Antriebsmotor (1) wirken.

5. Bremsenprüfstand nach einem der vorhergehenden Ansprüche, **dadurch gekennzeichnet, dass** der Prüfstand weiterhin eine Klimakammer (8) umfasst, in der die zu prüfende Bremse (4) während der Prüfung untergebracht ist und/oder die Klimakammer (8) einen Sprühkopf (9) aufweist, der die zu prüfende Bremse (4) besprüht.

6. Verfahren zur Prüfung mindestens einer Bremse (4), wobei die zur Prüfung der Bremse (4) benötigte Energie bzw. das zur Prüfung der Bremse (4) benötigte Drehmoment von einem Antriebsmotor (1) zur Verfügung gestellt wird, wobei zumindest vor der Prüfung der Bremse (4) ein Lastgenerator (3) zugeschaltet wird und die benötigte Energie bzw. das benötigte Drehmoment durch ein Drehmomenten-Gleichgewicht zwischen dem Antriebsmoment eines Antriebsmotors (1) und einem Lastmoment eines Lastgenerators (3) aufgebaut bzw. bereitgestellt wird, wobei das von dem Lastgenerator (3) erzeugte Lastmoment während der Prüfung der Bremse (4) verkleinert oder abgeschaltet wird.

7. Verfahren nach Anspruch 6, **dadurch gekennzeichnet, dass** das Lastmoment des Lastgenerators (3) von der Steuerung (5) vor der Prüfung der Bremse (4) zeitabhängig entsprechend einer Rampe (20) erhöht wird und/oder die von dem Antriebsmotor (1) zur Verfügung gestellte Energie in der Bremse (4) während der Prüfung umgesetzt wird.

8. Verfahren nach einem der Ansprüche 6 oder 7, **dadurch gekennzeichnet, dass** die Drehzahl des Antriebsmotors (1) und das Lastmoment des Lastgenerators (3) von der Steuerung (5) während der Prüfung der Bremse (4) entsprechend der Umsetzung der Energie an der Bremse (4) geregelt werden und/oder die Drehzahl des Antriebsmotors (1) von der Steuerung (5) bis zur Prüfung der Bremse (4) als konstant geregelt wird, indem alle wirksamen Drehmomente des Antriebsmotors (1), des Lastgenerators (3) und der Bremse (4) im Gleichgewicht gehalten werden.

9. Verfahren nach einem der Ansprüche 6 bis 8, **dadurch gekennzeichnet, dass** während der Prüfung der Bremse (4) Daten zum Bremsverhalten, die eine Bewertung der zu prüfenden Bremse (4) ermöglichen, von der Steuerung (5) verarbeitet und vom Fahrsimulationsspeicher (10) aufgezeichnet werden und/oder im Fahrsimulationsspeicher mindestens eine Streckenprofilinformation hinterlegt ist und die Steuerung aus dieser Streckenprofilinformation einen zeitlichen Verlauf von Drehmoment und Drehzahl ermittelt, der in der Testphase, nach Prüfungsbeginn, an der Bremse anliegen soll, und diese Parameter auf den Antriebsmotor übertragen werden.

10. Verwendung eines Prüfstandes nach den Ansprüchen 1 bis 5 zur Durchführung eines Verfahrens nach Ansprüchen 6 bis 9.

## Claims

1. Brake test stand comprising, at minimum,
- at least one drive motor (1)
- which can be coupled, via at least one torque transmission device (2), to
- a load generator (3) and
- at least one brake (4) to be tested,
the drive motor (1) providing the energy to be converted by the brake (4) to be tested and/or the torque to be produced by the brake (4), and, at least before the testing of the brake (4), the load generator (3) absorbing the energy provided by the drive motor (1) and/or the torque provided by the drive motor (1),
**characterised in that**
the brake test stand has a control system (5), which includes at least one input for the signal of at least one torque sensor (6, 7) and includes outputs respectively for controlling the load generator (3), the drive motor (1) and the brake (4) to be tested.

2. Brake test stand according to claim 1,
**characterised in that**
a rotational speed sensor (19), connected to the control system (5), is connected to the torque transmission device (2), which transmits the torque between the drive motor (1) and the brake (4) to be tested, and/or the control system (5) includes a travel simulation memory (10) and the control system (5) is configured to regulate the load torque or energy uptake of the load generator (3) and the rotational speed of the drive motor (1) on the basis of the travel data from the travel simulation memory (10), and/or the travel simulation memory (10) has a data interface (18) for data import and export.

3. Brake test stand according to any of the preceding claims,
**characterised in that**
the drive motor (1) is formed by at least one DC electric motor, at least one AC electric motor, at least one combustion engine, at least one hydraulic engine or at least one pneumatic engine, and/or the drive motor (1) is formed from a plurality of sub-drive-motors, the torques of these sub-drive-motors acting in aggregate on the brake (4) to be tested.

4. Brake test stand according to any of the preceding claims,
**characterised in that**
the load generator (3) consists of at least one eddy current brake or at least one electric generator and/or the load generator (3) is formed from a plurality of sub-load-generators, the load torques of these sub-load-generators acting in aggregate on the drive motor (1).

5. Brake test stand according to any of the preceding claims,
**characterised in that**
the test stand further has a climatic chamber (8) in which the brake (4) to be tested is accommodated during the test, and/or the climatic chamber (8) has a spray head (9) which sprays the brake (4) to be tested.

6. Method for testing at least one brake (4), the energy required for testing the brake (4) and/or the torque required for testing the brake (4) being provided by a drive motor (1), a load generator (3) being switched on, at least before the testing of the brake (4), and the required energy and/or required torque being built up or provided by way of a torque equilibrium between the drive torque of a drive motor (1) and a load torque of a load generator (3), the load torque generated by the load generator (3) being reduced or switched off during the testing of the brake (4).

7. Method according to claim 6,
**characterised in that**
the load torque of the load generator (3) is increased by the control system (5), before the testing of the brake (4), in a time-dependent manner in accordance with a ramp (20), and/or the energy provided by the drive motor (1) is converted in the brake (4) during the test.

8. Method according to either claim 6 or claim 7,
**characterised in that**
the rotational speed of the drive motor (1) and the load torque of the load generator (3) are regulated by the control system (5) during the testing of the brake (4) in accordance with the conversion of the energy at the brake (4), and/or the rotational speed of the drive motor (1) is regulated by the control system (5) to be constant until the testing of the brake (4), **in that** all of the effective torques of the drive motor (1), load generator (3) and brake (4) are held in equilibrium.

9. Method according to any of claims 6 to 8,
**characterised in that,**
during the testing of the brake (4), data on the brake properties which make it possible to evaluate the brake (4) to be tested are processed by the control system (5) and displayed by the travel simulation memory (10), and/or at least one piece of route profile information is stored in the travel simulation memory and the control system determines from this route profile information a progression of torque and rotational speed over time which is supposed to be present at the brake in the test phase, after the start of testing, and these parameters are transmitted to the drive motor.

10. Use of a test stand according to claims 1 to 5 to carry out a method according to claims 6 to 9.

## Revendications

1. Banc d'essai de freins comprenant au moins :
- au moins un moteur d'entraînement (1)
- qui peut être couplé par le biais d'au moins un dispositif de transmission de couple (2) à
- un générateur de charge (3), et
- au moins un frein (4) à contrôler,
le moteur d'entraînement (1) fournissant l'énergie à convertir par le frein (4) à contrôler ou le couple à produire par le frein (4) et, au moins avant le contrôle du frein (4), le générateur de charge (3) absorbant l'énergie fournie par le moteur d'entraînement (1) ou le couple fourni par le moteur d'entraînement (1),
**caractérisé en ce que**
le banc d'essai de freins présente un organe de commande (5), qui présente au moins une entrée pour le signal d'au moins un capteur de couple (6, 7) et qui présente des sorties respectivement pour la commande du générateur de charge (3), du moteur d'entraînement (1) et du frein (4) à contrôler.

2. Banc d'essai de freins selon la revendication 1,
**caractérisé en ce que**
un capteur de vitesse de rotation (19) est monté sur le dispositif de transmission de couple (2) qui transmet le couple entre le moteur d'entraînement (1) et le frein (4) à contrôler, ledit capteur de vitesse de rotation étant relié à l'organe de commande (5) et/ou l'organe de commande (5) présentant une mémoire de simulation de conduite (10) et l'organe de commande (5) étant conçu, pour sur la base des données de conduite de la mémoire de simulation de conduite (10), réguler le couple de charge ou l'absorption d'énergie du générateur de charge (3) ainsi que la vitesse de rotation du moteur d'entraînement (1) et/ou la mémoire de simulation de conduite (10) présentant une interface de données (18) pour l'importation et l'exportation de données.

3. Banc d'essai de freins selon l'une des revendications précédentes,
**caractérisé en ce que**
le moteur d'entraînement (1) est formé par au moins un moteur électrique à courant continu, au moins un moteur électrique à courant alternatif, au moins un moteur à combustion interne, au moins un moteur hydraulique ou au moins un moteur pneumatique et/ou le moteur d'entraînement (1) est formé d'une pluralité de moteurs d'entraînement partiels, les couples de ces moteurs d'entraînement partiels agissant additionnés les uns aux autres sur le frein (4) à contrôler.

4. Banc d'essai de freins selon l'une des revendications précédentes,
**caractérisé en ce que**
le générateur de charge (3) est constitué d'au moins un frein à courants de Foucault ou au moins un générateur électrique et/ou le générateur de charge (3) est formé d'une pluralité de générateurs de charge partiels, les couples de charge de ces générateurs de charge partiels agissant additionnés les uns aux autres sur le moteur d'entraînement (1).

5. Banc d'essai de freins selon l'une des revendications précédentes,
**caractérisé en ce que**
le banc d'essai comprend en outre une chambre climatique (8) dans laquelle le frein (4) à contrôler est placé pendant le contrôle et/ou la chambre climatique (8) présente une tête de pulvérisation (9) qui asperge le frein (4) à contrôler.

6. Procédé de contrôle d'au moins un frein (4), dans lequel l'énergie nécessaire pour contrôler le frein (4) ou le couple nécessaire pour contrôler le frein (4) est fourni par un moteur d'entraînement (1), un générateur de charge (3) étant mis en circuit au moins avant le contrôle du frein (4) et l'énergie nécessaire ou le couple nécessaire étant établi ou fourni par un équilibre des couples entre le couple d'entraînement d'un moteur d'entraînement (1) et un couple de charge d'un générateur de charge (3), le couple de charge généré par le générateur de charge (3) étant diminué ou arrêté pendant le contrôle du frein (4).

7. Procédé selon la revendication 6,
**caractérisé en ce que**
le couple de charge du générateur de charge (3) est augmenté par l'organe de commande (5) avant le contrôle du frein (4) selon une rampe (20) en fonction du temps et/ou l'énergie fournie par le moteur d'entraînement (1) est convertie dans le frein (4) pendant le contrôle.

8. Procédé selon l'une des revendications 6 ou 7,
**caractérisé en ce que**
la vitesse de rotation du moteur d'entraînement (1) et le couple de charge du générateur de charge (3) sont régulés par l'organe de commande (5) pendant le contrôle du frein (4) en fonction de la conversion de l'énergie au niveau du frein (4) et/ou la vitesse de rotation du moteur d'entraînement (1) est régulée par l'organe de commande (5) de manière à être constante jusqu'au contrôle du frein (4) en maintenant tous les couples actifs du moteur d'entraînement (1), du générateur de charge (3) et du frein (4) en équilibre.

9. Procédé selon l'une des revendications 6 à 8,
**caractérisé en ce que,**
pendant le contrôle du frein (4), des données relatives au comportement du frein, qui permettent une évaluation du frein (4) à contrôler, sont traitées par l'organe de commande (5) et enregistrées par la mémoire de simulation de conduite (10) et/ou au moins une information de profil de parcours est stockée dans la mémoire de simulation de conduite et l'organe de commande détermine, à partir de cette information de profil de parcours, une variation dans le temps du couple et de la vitesse de rotation, qui doit être appliquée au frein dans la phase de test, après le début du contrôle, et ces paramètres sont transmis au moteur d'entraînement.

10. Utilisation d'un banc d'essai selon les revendications 1 à 5 destiné à exécuter un procédé selon les revendications 6 à 9.
